# EUROPEAN PATENT SPECIFICATION

(11) **EP 1 784 459 B1**
(45) Date of publication and mention of the grant of the patent: **01.10.2008**
(21) Application number: 05761166.7
(22) Date of filing: 10.06.2005
(51) Int. Cl.: C09D 4/00, C09D 167/07, C09D 5/24

(54) **FREE RADICAL CURABLE CONDUCTIVE PRIMER**
RADIKALISCH HÄRTBARE LEITFÄHIGE GRUNDIERUNG
APPRET CONDUCTEUR DURCISSABLE A RADICAUX LIBRES

(30) Priority: 10.06.2004 US 578809 P
(43) Date of publication of application: 16.05.2007
(73) Proprietor: THE SHERWIN-WILLIAMS COMPANY, Cleveland, OH 44115 (US)
(72) Inventor: ZYCHOWSKI, Frank, D., Berea, OH 44017 (US)
(74) Representative: Heinemann, Monica
(86) International application number: PCT/US2005/020575
(87) International publication number: WO 2005/123847

(56) References cited:
- US-A- 5 453 451
- US-A- 6 025 031
- US-A1- 2001 018 467
- US-A1- 2003 008 934
- STOYE, D.; ED.: "Paints, Coatings and solvents" 1993, VCH , WEINHEIM, NEW YORK , XP002345560 page 106 - page 107 page 107, line 3 - line 6

## Description

This application claims the benefit of U.S. Provisional Application No. 60/578,809, filed June 10, 2004, which is hereby incorporated by reference.

### BACKGROUND

The present invention concerns coating compositions, particularly conductive, sprayable primers. The coating composition of the present invention is more particularly a substantially 100% solids, sprayable, free radical curable electroconductive coating compositions.

It is known to those skilled in the art to which the present invention pertains that many large, durable and lightweight plastic compositions are formulated from sheet molded compound (SMC). SMC is lightweight, durable and is stable i.e., undergoes minimal shrinkage.

The formulations for SMC compounds are well known to the skilled artisan. Essentially, sheet molded compound is a thermoset resin mixture comprising a polymer, glass fibers, and fillers. Generally the polymer is selected according to the desired properties of the product produced therefrom, as well as the processing parameters. In fabricating items from SMC, usually, the SMC resin is processed into a mat or pre-form and, then, placed under heat and several tons of pressure in a suitable mold to form the item, although other manufacturing processes may exist. The mold conforms the mat to the requisite part or shape. After forming the mat into the desired shape, the item produced is removed from the mold and it is, then, finished such as by painting or the like.

Where SMC is used for the manufacture of large items, such as automotive body panels, a finish may be applied through electrostatic spraying. However, other spray application methods may be used, such as, for example, siphon feed spray guns, gravity feed spray guns, High Volume Low Pressure (HVLP) spray guns, airless spray systems, air assisted airless spray systems, rotary atomizer, disk rotators and the like, as well as combinations thereof.

When exposed to electrostatic spray finishes, SMC panels present certain unique problems. Because SMC is a non-conductive plastic, it does not have the capacity to carry an electrical current. Therefore, a conductive solution or coating, such as a conductive primer, conductive preparation coat, conductive undercoat or the like must be applied to the SMC surface so that subsequent coatings can be applied thereover via electrostatic application.

Such conductive solutions or coatings are known in the prior art. Ordinarily, these prior art primers are either solvent-based, water based, powder coatings, or combinations thereof. These primers, generally, require a cure at elevated temperatures in a suitable oven after application. However, because of the inherent nature of SMC, this creates certain problems. SMC materials are porous. When solvent evaporates or is removed from the coating, there is a tendency for surface irregularities, which are manifested by bubbly looking voids or "pops" to appear or be created on the surface of the finished product Oftentimes, the "pops" may not be noticed until a final topcoat is applied and cured. Obviously, this causes a great expense in labor and materials to correct the problem. The porous nature of the SMC and the problems it creates vis-a-vis finishing, may be more pronounced where there are sharp edges associated with the molded part. Although manufacturing or molding techniques have been developed to deter the problems associated with the porosity, it still remains a problem. Presently, the techniques used to limit porosity vary from manufacturer to manufacturer. Among the most common practices used today are either air-drying or the use of force air-dried two part coating compositions. In either instance, though, this involves added labor, energy, opportunity and material costs, as well as volatile organic component (VOC) emissions.

Other manufacturers may abrade those areas which exhibit porosity, after the first coat of primer is applied and cured, by methods such as sanding those areas or the like. Thereafter, a second coat of primer is applied to the product. Again, these techniques increase the amount of labor and material, as well as energy costs, for smoothing out the surface and removing the pops.

Aside from the irregularities, prior art coatings create added expense in their very application. Usually, with solvent-based, water-based, powder coating applications, and combinations thereof, a primer coating or multiple primer coatings is applied to the part, and may be followed by sealant coating(s), and, then, a topcoat, being applied thereover. The topcoat is generally the last coating operation done in the system. The application of these layers can add expense in labor, VOC emissions, energy, and materials. The subsequent result is a reduced production rate.

As is detailed hereinafter, the present invention alleviates many of the problems encountered heretofore by providing a substantially 100% solids, sprayable composition that is curable through a number of methods, such as conventional ovens or via infra red (IR). The present invention is directed toward a conductive coating composition that not only functions as a primer but may also be utilized as a sealer or a combination, as well. This new primer provides a sealed surface that minimizes popping or outgassing, in turn saving repair costs, and provides a conductive surface to allow electrostatic application of subsequent paint layers. Because the initiator results in a thermally cured composition, there is no need to employ UV light or electron beam (EB), and accordingly accompanying equipment, such as is necessary with the use of photoinitiators, to achieve the cured composition as herein described.

Advantages of this composition include reduced repair costs due to minimal popping, lower VOC emissions and lower energy costs attributed to the curing process.

### SUMMARY OF THE INVENTION

The composition hereof, generally, comprises a mixture of: (a) a free-radical curable, polymerizable compound which may be a polymer, a pre-polymer, a monomer, and mixtures thereof; (b) a initiator which may be a blend of initiators. In one embodiment, a conductive pigment or a mixture of pigments is included in the composition.

The composition hereof, generally, comprises (a) from about 50% to about 95%, by weight, based on the total weight of the composition of a free-radical curable, polymerizable compound, (b) from about 0.1% to about 4%, by weight, based upon the total weight of the composition, of the initiator. Additionally, the composition may include from about 0.5% to about 10%, by weight, based upon the total weight of the composition, of a conductive pigment.

The pigment may me a mixture or blend comprising both conductive and non-conductive pigments, including (a) mixtures of conductive pigments and (b) mixtures of conductive and non-conductive pigment.

In one embodiment, the composition is substantially free of a photoinitiator. Also the composition hereof may contain adjuvants such as flow additives, dispersion aids, defoamers, deaerators, suspension aids, and mixtures thereof. Other adjuvants, as needed, may also, be incorporated hereinto. The composition may also contain fillers or extenders that may be organic or inorganic, as well as mixtures thereof.

The composition hereof is used to coat SMC surfaces and, in particular, automotive panels. It is to be understood, however, that the present invention also contemplates coating SMC surfaces other than automotive panels, as well as other substrates such as, but not limited to, reaction injection molding (RIM), reaction thermal molding (RTM), hand lay up, acrylonitrile butadiene styrene (ABS), thermoplastic olefin (TPO), polycarbonate (PC), and the like.

In one embodiment, the viscosity of the composition is less than about 3000 centipoise at 25°C. In one useful embodiment, the composition is at least about 95% non-volatile material.

### DETAILED DESCRIPTION OF ILLUSTRATE EMBODIMENTS

In accordance herewith there is provided a composition for sealing and priming porous plastic substrates. The composition is a low VOC, substantially 100% solids curable primer. In one embodiment, the composition is at least about 95% non-volatile materials. The primer utilizes free-radical cure technology by cross-linking acrylate monomers and oligomers with thermally generated free radicals from organic peroxide(s). In another useful embodiment, cross-linkable and non-functional resins can be used that are not acrylate functional. The composition hereof, generally, comprises a mixture of (a) a free-radical curable, polymerizable compound which may be either a polymer, a monomer, an oligomer, and mixtures thereof, (b) a thermal initiator; and (c) a conductive pigment or a mixture of pigments.

Unless otherwise indicated, as used herein, the terms "about" and "approximately" mean ± 20%.

One embodiment of the composition disclosed herein comprises: (a) from about 50% to about 95%, by weight, based on the total weight of the composition, of a free-radical curable, polymerizable compound, (b) from about 0.1% to about 4%, by weight, based upon the total weight of the composition of the initiator and (c) from about 0.5% to about 10%, by weight, based upon the total weight of the composition, of a conductive pigment.

The pigment mixture may comprise both conductive and non-conductive pigments in admixture including (a) a mixture of conductive pigments and (b) a mixture of conductive and non-conductive pigment.

Dispersion aids, flow additives, defoamers, deaerators, suspension aids, and mixtures thereof may be incorporated into the composition to tailor the properties of the primer/sealer. Other adjuvants, as needed, may also, be incorporated hereinto. The composition may, also, contain fillers or extenders that may be organic or inorganic, as well as mixtures thereof.

The present coating composition functions not only as a primer but as a sealer, thus, eliminating the need for separate primer and sealer coatings.

As noted, the first component of the present composition is a substantially solvent free, sprayable, free-radical curable polymerizable compound that utilizes unsaturated monomers and/or oligomers in order to minimize the viscosity and provide the highest application solids of the curable coatings. The polymerizable reactants suitable for use in this invention can be any compound having polymerizable ethylenic unsaturation such as unsaturated polymers, oligomers, monomers or combinations thereof. Representative polymeric or oligomeric polyunsaturated compounds are well known in the art and can include, for example, unsaturated polyesters obtained by the reaction of polyols and maleic or fumaric acid, reaction products of polyacids or polyisocyanates with unsaturated alcohols, reaction products of polyepoxides and unsaturated acids such as acrylic or methacrylic acids, reaction products of polyols and unsaturated acids or esters, and other methods well known in the art.

In one useful embodiment, the polymerizable compound is acrylate functional. Where the compound is acrylate functional, the acrylate may be monofunctional or polyfunctional. Also, mixtures of acrylate functional compounds may be used. Such a mixture may comprise all monofunctional acrylate, all polyfunctional compounds, or mixtures thereof. The monomeric acrylates generally function as adhesion promoters as well as controlling the viscosity of the final composition and provide various characteristics upon cure. It should be noted that a single acrylate may, also, be used herein.

For many applications, it is especially preferred to utilize unsaturated monomers and/or oligomers in order to minimize the viscosity and provide the highest application solids of the curable coatings.

Especially useful monomers include vinyl and allyl compounds such as styrene, vinyl acetate, vinyl ethers, vinyl esters, unsaturated polyesters, unsaturated resins, vinylidene chloride, and (meth)acrylates of monohydric alcohols, acrylamides and similar (meth)acrylate acid derivatives, such as methylmethacrylate, hydroxyethyl acrylate, acrylonitrile, and acrylamide.

Other useful acrylates or acrylate functional components include monoacrylates, diacrylates, triacrylates, polyacrylates, aliphatic and aromatic urethane-modified acrylates, urethane acrylates, polyester-modified acrylates, polyester acrylates, vinyl acrylates, epoxy acrylates, epoxy modified acrylates, polyether acrylates, amine modified acrylates, acrylic polymer modified acrylates, acid functional acrylates, acid modified acrylates, silicone acrylates, silicone modified acrylates, acrylate functional cycloaliphatic resins, acrylate functional cationic resins, and mixtures thereof.

In one useful embodiment, the polymerizable compound comprises a mixture of acrylates that are selected from the group consisting of aliphatic diacrylate, urethane acrylate, tetrahydrofufuryl acrylate, urethane dimethacrylate, and polyester acrylate, as well as mixtures and derivatives thereof. It is notable that the polyester acrylate is particularly useful in the composition described herein because of its characteristic as an adhesion promoter. An example of a urethane acrylate oligomer which can be used in accordance with this invention is a hexafunctional aliphatic urethane acrylate oligomer that is sold by UCB Chemicals Corp under the trade name Ebecryl® 8301. One example of a polyester acrylate that can be used in accordance with this invention is a polyester resin diluted with tripropylene glycol diacrylate, which is sold by UCB Group under the trade name Ebecryl® 525.

As noted hereinabove, generally, the mixture of acrylates will be present in the composition in an amount ranging from about 50% to about 95%, by weight, based on the total weight of the composition. In another useful embodiment the mixture of acrylates is from about 80% to about 95%, by weight, based upon the total weight of the composition.

Where a mixture of acrylate functional and/or free-radical polymerizable compounds is used, the presence of each component(s) in the mixture will vary, primarily depending on the desired properties of the resulting, i.e. hardness, degree of filling, etc.

The second component of the present invention is an activator, which includes an initiator. The initiator that is used in the composition of the present invention may be of the free radical type. A mixture or blend of initiators may be also used. In one embodiment of the present invention, the initiator or initiators that may be use are not photoinitiators.

The peroxide initiator should be used in an amount sufficient to overcome the effect of the inhibitor and to cause crosslinking or curing of the ethylenically unsaturated materials. In general the peroxide initiator is used in an amount of about 0.1% to about 5% by weight based on the weight of the ethylenically unsaturated materials employed in the coating composition. In one embodiment, the initiator is present in an amount ranging from about 1% to about 2%, by weight, based upon the total weight of the composition. It is to be appreciated that the amount of thermal initiator required in a given formulation will depend on the bake cycle specifications, for example, the time and temperature of the bake.

In one embodiment, the coating composition also includes a conductive pigment. Usually conductive pigments of the type contemplated for use herein, ordinarily, include conductive carbon black pigment. These conductive pigments are well-known and commercially available compounds and are, generally, defined as dry conductive carbon black pigment. Dispersions can be made of any of a number of pigments in monomers or oligomers or combinations thereof. In one useful embodiment, a mixture of conductive pigments is employed.

Other components that can be added to the present coating system to induce or enhance conductivity include, additional conductive pigments other than those enumerated above and include antimony doped tin oxide, and metallic pigments such as gold, platinum, silver, titanium, aluminum, copper, and the like, as well as mixtures thereof. These conductive metal pigments may be supported or unsupported. These pigments come in forms such as flakes, powders, spheres, microballoons, microencapsulated, or other physical forms. Other conductive materials that are contemplated for use herein include encapsulated pigments; conductive polymers; conductive fibers (fibrols or fibrils); conductive additives, as well as mixtures thereof. These additional conductive materials may be used conjointly with the conductive pigments identified above. Where used, the conductivity enhancers will be present in an amount dependent on the desired conductivity level of the composition.

The total amount of conductive material, i.e., pigment with or without enhancer, is, generally, employed in an amount ranging from about 0.5% to about 10%, by weight, based upon the total weight of the composition. The amount of conductive pigment generally is dependent upon the final desired conductivity level of the composition.

In one embodiment, conductive carbon black is used in the coating composition in an amount of from about 1 to 2 parts by weight per 100 parts by weight of the polymerizable oligomer. In one embodiment, the conductive carbon black pigment that is used is sold under the trade name Printex XE2 by Degussa Corporation. A conductive additive that can be employed is sold under the trade name Efka® 8860.

The composition may also contain various pigments to introduce color to the composition. Common pigments used may include, titanium dioxide, phthalos, iron oxides, lamp black, carbon black, various organic and inorganic pigments, and mixtures thereof.

As previously noted, dispersions can be made of any of a number of pigments. A number of dispersing agents can be employed for this purpose. Such dispersing agents include polymeric dispersants. For example, some dispersants that may be used in accordance with this invention include a dispersant sold under the trade name Nuosperse by Condea Servo LLC, and Solsperse^{™} 5000 and 32500 which are sold by Lubrizol Ltd.

As noted hereinabove minor amounts of adjuvants may be incorporated herein such as, flow additives, dispersing aids (such as, for example, polymeric dispersants), defoamers, deaerators, suspension aids, scavengers, stabilizers, antioxidants, plasticizers, nonfunctional or nonreactive diluents, hydrocarbon oils, conductive additives, and the like, as well as mixtures thereof.

In one embodiment, the flow agent that is used is sold under the trade name Tego® Flow 300 by Degussa Corporation.

Suitable fillers or extenders which may be added to the composition for various properties include the commonly used fillers or extenders, such as carbonates, silicates, sulfate, silicas, silicates, sulfites, clays, carbides, oxides, polyfluorinated ethylenes, ferrites, aluminas, nitrides, polymeric fillers, fibers, cellulosics, ceramics, and the associated precipitates, derivatives, and hydrates and the like, as well as mixtures thereof. These extenders may be in a treated or non-treated form, and may be natural occurring products or synthetically manufactured, and may be reclaimed or recycled, as well as combinations thereof.

Thermal initiators that are suitable for use in the practice of the present invention include organic free-radical or free radical generating initiator (catalyst) to catalyze the polymerization, copolymerization, and/or crosslinking of the ethylenically unsaturated oligomers and the other ethylenically unsaturated materials. One example of a thermal initiator that can be used in accordance with this invention is peroxide. Some examples of peroxides include diacyl peroxides, dialkyl peroxides, hydroperoxides; ketone peroxides, monoperoxycarbonates, peroxydicarbonates, peroxyesters, peroxyketals and blends and mixtures thereof, including but not limited to tertiary butyl perbenzoate, tertiary butyl peroctoate in diallyl phthalate, diacetyl peroxide in dimethyl phthalate, dibenzoyl peroxide, di(p-chlorobenzoyl) peroxide in dibutyl phthalate, di(2,4-dichlorobenzoyl) peroxide with dibutyl phthalate, dilauroyl peroxide, methyl ethyl ketone peroxide, cyclohexanone peroxide in dibutyl phthalate, 3,5-dihydroxy-3,4-dimethyl-1,2-dioxacyclopentane, t-butylperoxy(2-ethyl hexanoate), caprylyl peroxide, 2,5-dimethyl-2,5-di(benzoyl peroxy) hexane, 1-hydroxy cyclohexyl hydroperoxide-1, t-butyl peroxy (2-ethyl butyrate), 2,5-dimethyl-2,5-bis(t-butyl peroxy) hexane, cumyl hydroperoxide, diacetyl peroxide, t-butyl hydroperoxide, ditertiary butyl peroxide, 3,5-dihydroxy-3,5-dimethyl-1,2-oxacyclopentane, and 1,1-bis(t-butyl peroxy)-3,3,5-trimethyl cyclohexane and the like and mixtures thereof. It is desirable sometimes to use mixtures of initiators to take advantage of their different decomposition rates and times at different temperatures and so forth.

One useful peroxide that may be used in accordance with this invention is di-(4-t-butyl cyclohexyl) peroxydicarbonate, which is sold by Crompton Corporation under the trade name Espercarb® 1043. In one useful embodiment, a peroxide that has a 10-hour half-life at about 35-45°C is used, and it is particularly useful to employ the use of a peroxide that has a 10-hour half-life at about 43°C. It has been discovered that an initiator with this range of half-life provides for a thermally cured coating, with a low level of VOCs, through the use of conventional ovens to decrease cure time.

The coating composition is generally a mixture of polymeric compound and activator. In preparing a coating composition in accordance herewith, the initiator(s) is dispersed in an acrylate or other curable material and dissolved therewithin to form an activator or initiator solution. The initiator solution is then added to the remaining composition that comprises, for example, a polymerizable compound and any desired additives, including but not limited to dispersing agents, conductive additives, and flow agents, fillers, extenders, and adjuvants. The resulting composition is sprayable onto an SMC surface through conventional electrostatic spraying equipment as well as standard siphon feed spray guns, HVLP spray guns, airless spray equipment, air assisted airless spray equipment, disk rotators, rotary atomizers, and the like depending on the mode of application, as denoted above.

The polymer is cured by a rapid polymerization reaction that is initiated by the initiator component of the composition when it is exposed to suitable heat source(s) or other catalyzing effect. In one embodiment, the composition, once applied to a part, can be cured in an oven where the part temperature attains at least about 107°C (225°F) for at least about 30 minutes, however, other cure schedules may be employed. A flash or dwell time of about 5-15 minutes is typical prior to baking. Conventional ovens can be employed to cure the composition once it is applied onto a surface. Typical primers are based at about 149°C (300°F) for at least about 30 minutes. The primer alternatively has the capacity to be cured with IR radiation or other devices. If IR techniques are used to cure the primer, the cure time is 1 minute at 100%, or 4 minutes at 50%, and a part surface temperature of about 149°C (300°F). Upon curing, the material polymerizes in and about the substrate, providing adhesion thereto.

The composition of the present invention does not contain any significant water or organic solvent, which must be evaporated before curing is complete. Rather, the present invention includes low molecular weight polymerizable monomers and/or oligomers that are polymerized in place upon exposure to an adequate cure schedule. Therefore, the composition of the present invention is much less hazardous to the environment than the previously available compounds, which included organic solvents that had to be evaporated intro the atmosphere in order to cure the finish.

Possible methods of application include spraying, brushing, curtain coating, dipping, and rolling. The composition has the ability to control viscosity by the use of low molecular weight monomers which take the place of organic solvents but which also participate and contribute to final polymer properties. As viscosity can be controlled, the formulation can be applied through various application means. By controlling the viscosity of the material, depth and speed of penetration before curing can be controlled. The viscosity of the composition hereof is less than about 3500 centipoise at 25°C at about 100% solids. In one embodiment, the viscosity is less than about 1000 centipoise at about 100% solids.

As noted, the present invention enables the production of a substantially solvent-free composition. Thus, the present invention precludes the necessity of nonreactive solvents, such as water, alcohols, volatile organics and the like. However, minor amounts of such may be included without deleteriously affecting the present invention.

As noted, in one useful embodiment, the polymer of the present invention is cured by thermal exposure, such as by exposure in a conventional oven or through an IR cure, or combinations thereof.

As noted hereinabove the present coating composition is useful both as an electrically conductive primer and sealer. After being deposited onto a surface, other electrically conductive or non-electroconductive coatings may be applied via electrostatic or other application method or methods thereunto because of the electrically conductive nature of the coating in the liquid and cured state.

The composition hereof may be used to coat SMC surfaces and, in particular, automotive panels. It is to be understood, however, that the present invention also contemplates coating SMC surfaces other than automotive panels, as well as other substrates such as, but not limited to, reaction injection molding (RIM), reaction thermal molding (RTM), hand lay up, acrylonitrile-butadiene styrene (ABS), thermoplastic olefin (TPO), polycarbonate (PC), hybrid molding, and mixtures thereof.

For a more complete understanding of the present invention reference is made to the following illustrative example.

### EXAMPLE

This example illustrates a thermal curable, substantially 100% solids, sprayable conductive primer. Into a suitable vessel equipped with stirring means were added the following ingredients and amounts:

| Ingredient | Amount (parts by weight) |
|---|---|
| First component: | |
| Ebecryl® 525¹ | 217.1 |
| Urethane Methacrylate | 108.7 |
| Acrylated Diol | 72.2 |
| Ebercyl® 8301² | 36.2 |
| Tetrahydrofurfuryl acrylate | 253.0 |
| Nuosperse® 657³ | 26.5 |
| Solsperse® 5000³ | 0.4 |
| Solsperse® 32500³ | 4.6 |
| Printex XE2⁴ | 14.6 |
| Tego Flow 300⁵ | 2.4 |
| Efka 8660⁶ | 7.0 |
| | |
| These materials are grind to 6-6.75 on the Hegman Gauge. | |
| The vessel is rinsed with Tetrahydrofurfuryl acrylate | 70.9 |
| | |
| The batch is cooled and to it is added: | |
| 6% Cobalt Solution | 3.7 |
| | |

| Activator Formula: | |
|---|---|
| Tetrahydrofurfuryl acrylate | 91.5 |
| Espercarb 1043⁷ | 5.6 |
| | |
| The Activator ingredients are mixed until all of the Espercarb® 1043 is dissolved. The Activator solution is then added to the first component to form the curable composition. | |

| | |
|---|---|
| ¹ Polyester Acrylate ² Acrylated aliphatic urethane oligomer ³ Dispersion Additive ⁴ Conductive Pigment ⁵ Flow additive ⁶ Conductive Additive ⁷ Di (4-Tert-Butylcyclohexyl) Peroxydicarbonateperoxydicarbonate | |

While the present invention has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the invention, in its broader aspects, is not limited to the specific details, the representative apparatus, and illustrative examples shown and described. Accordingly, departures may be made from such details without departing from the spirit or scope of the applicant's general inventive concept.

## Claims

1. A coating composition, comprising:
(a) at least one free-radical curable, polymerizable compound, wherein said polymerizable compound comprises at least a first acrylate functional compound and a second acrylate functional compound and at least one polyester; and
(b) an initiator, wherein the initiator has a half-life of about 10 hours at less than about 50°C; and
wherein said composition comprises from 50% -95%, based upon the total weight of the composition, polymerizable compound and from about 0.1%-4%, based upon total weight of the composition, initiator; and wherein the viscosity of the composition is less than about 3500 centipoise at 25°C.

2. The composition of claim 1, wherein said initiator has a half-life of about 10 hours at about 35-45°C.

3. The composition of claim 1, wherein said composition is substantially free of a photoinitiator.

4. The composition of claim 1, further comprising a conductive pigment, wherein said pigment is of an amount between about 0.5% to about 10% by weight, based on the total weight of the composition.

5. The composition of claim 1, wherein the first acrylate functional compound is monofunctional and the second acrylate functional compound is polyfunctional.

6. The composition of claim 1 wherein the first and second acrylate functional compounds are selected from the group consisting of: monoacrylates, diacrylates, triacrylates, polyacrylates, aliphatic and aromatic urethane- modified acrylates, urethane acrylates, polyester-modified acrylates, polyester acrylates, vinyl acrylates, epoxy acrylates, epoxy modified acrylates, polyether acrylates, amine modified acrylates, acrylic polymer modified acrylates, acid functional acrylates, acid modified acrylates, silicone acrylates, silicone modified acrylates, acrylate functional cycloaliphatic resins, acrylate functional cationic resins, hybrid acrylates, thereof. ethoxylated bisphenol A acrylates, propoxylated acrylates, ethoxylated acrylates, trifunctional acrylic esters, unsaturated cyclic diones, polyester acrylates, silica acrylates, acrylic acrylates, and mixture thereof.

7. The composition of claim 1, wherein the initiator is a free radical initiator selected from the group consisting of: diacyl peroxides, dialkyl peroxides, hydroperoxides, ketone peroxides, monoperoxycarbonates, peroxydicarbonates, peroxyesters, and peroxyketals, including tertiary butyl perbenzoate, tertiary butyl peroctoate in diallyl phthalate, diacetyl peroxide in dimethyl phthalate, dibenzoyl peroxide, di(p-chlorobenzoyl) peroxide in dibutyl phthalate, di(2,4-dichlorobenzoyl) peroxide with dibutyl phthalate, dilauroyl peroxide, methyl ethyl ketone peroxide, cyclohexanone peroxide in dibutyl phthalate, 3,5-dihydroxy-3,4-dimethyl-1,2-dioxacyclopentane, t-butylperoxy(2-ethyl hexanoate), caprylyl peroxide, 2,5-dimethyl-2,5-di(benzoyl peroxy) hexane, 1-hydroxy cyclohexyl hydroperoxide-1, t-butyl peroxy (2-ethyl butyrate), 2,5-dimethyl-2,5-bis(t-butyl peroxy) hexane, cumyl hydroperoxide, diacetyl peroxide, t-butyl hydroperoxide, ditertiary butyl peroxide, 3,5-dihydroxy-3,5-dimethyl-1,2-oxacyclopentane, and 1,1-bis(t-butyl peroxy)-3,3,5-trimethyl cyclohexane and di-(4-t-butyl cyclohexyl) peroxydicarbonate and mixtures and combinations thereof.

8. The composition of claim 1, wherein said initiator comprises di-(4-t-butyl cyclohexyl) peroxydicarbonate.

9. The composition of claim 4, wherein the conductive pigment comprises carbon black pigment.

10. The composition of claim 9, wherein the conductive pigment further comprises a non-conductive pigment.

11. The composition of claim 1, wherein the viscosity of the composition is less than about 1000 centipoise at 25°C.

12. The composition of claim 1, wherein the composition is at least about 95% non-volatile materials.

13. A method of priming and sealing a non-conductive plastic substrate, comprising spraying onto the substrate a composition comprising:
(a) a free-radical curable, polymerizable compound comprising at least two acrylate functional compounds and at least one polyester; and
(b) an initiator, wherein the initiator has a half-life of about 10 hours at less than about 50°C.

14. The method of claim 13, wherein the substrate is SMC.

15. The method of claim 14, wherein the SMC substrate is an automotive body panel.

16. The method of claim 13, wherein said initiator is a free radical initiator selected from the group consisting of: diacyl peroxides, dialkyl peroxides, hydroperoxides, ketone peroxides, monoperoxycarbonates, peroxydicarbonates, peroxyesters, and peroxyketals, including tertiary butyl perbenzoate, tertiary butyl peroctoate in diallyl phthalate, diacetyl peroxide in dimethyl phthalate, dibenzoyl peroxide, di(p-chlorobenzoyl) peroxide in dibutyl phthalate, di(2,4-dichlorobenzoyl) peroxide with dibutyl phthalate, dilauroyl peroxide, methyl ethyl ketone peroxide, cyclohexanone peroxide in dibutyl phthalate, 3,5-dihydroxy-3,4-dimethyl-1,2-dioxacyclopentane, t-butylperoxy(2-ethyl hexanoate), caprylyl peroxide, 2,5-dimethyl-2,5-di(benzoyl peroxy) hexane, 1-hydroxy cyclohexyl hydroperoxide-1, t-butyl peroxy (2-ethyl butyrate), 2,5-dimethyl-2,5-bis(t-butyl peroxy) hexane, cumyl hydroperoxide, diacetyl peroxide, t-butyl hydroperoxide, ditertiary butyl peroxide, 3,5-dihydroxy-3,5-dimethyl-1,2-oxacyclopentane, and 1,1-bis(t-butyl peroxy)-3,3,5-trimethyl cyclohexane and di-(4-t-butyl cyclohexyl) peroxydicarbonate and mixtures and combinations thereof.

17. The method of claim 13 wherein the viscosity of the composition is less than about 3500 centipoise at 25°C.

18. An electroconductive sealer/primer composition, comprising:
(a) at least one radiation curable, polymerizable compound, wherein said polymerizable compound comprises at least one polyacrylate, at least one monoacrylate, and at least one polyester;
(b) a thermal initiator, wherein the initiator has a half-life of about 10 hours at less than about 50°C; and
(c) a conductive pigment;
wherein said composition comprises from 50% -95%, based upon the total weight of the composition, polymerizable compound and from about 0.1%-4%, based upon total weight of the composition, initiator; wherein said composition is substantially free of a photoinitiator; and wherein the viscosity of the composition is less than about 3500 centipoise at 25°C.

19. The composition of claim 18, wherein said initiator has a half-life of about 10 hours at about 35-45°C.

20. The composition of claim 18, wherein said pigment is of an amount between about 0.5% to about 10% by weight, based on the total weight of the composition.

21. The composition of claim 18, wherein said pigment comprises carbon black.

22. The composition of claim 18, wherein the initiator is a thermal initiator selected from the group consisting of diacyl peroxides, dialkyl peroxides, hydroperoxides, ketone peroxides, monoperoxycarbonates, peroxydicarbonates, peroxyesters, and peroxyketals, including tertiary butyl perbenzoate, tertiary butyl peroctoate in diallyl phthalate, diacetyl peroxide in dimethyl phthalate, dibenzoyl peroxide, di(p-chlorobenzoyl) peroxide in dibutyl phthalate, di(2,4-dichlorobenzoyl) peroxide with dibutyl phthalate, dilauroyl peroxide, methyl ethyl ketone peroxide, cyclohexanone peroxide in dibutyl phthalate, 3,5-dihydroxy-3,4-dimethyl-1,2-dioxacyclopentane, t-butylperoxy(2-ethyl hexanoate), caprylyl peroxide, 2,5-dimethyl-2,5-di(benzoyl peroxy) hexane, 1-hydroxy cyclohexyl hydroperoxide-1, t-butyl peroxy (2-ethyl butyrate), 2,5-dimethyl-2,5-bis(t-butyl peroxy) hexane, cumyl hydroperoxide, diacetyl peroxide, t-butyl hydroperoxide, ditertiary butyl peroxide, 3,5-dihydroxy-3,5-dimethyl-1,2-oxacyclopentane, and 1,1-bis(t-butyl peroxy)-3,3,5-trimethyl cyclohexane and di-(4-t-butyl cyclohexyl) peroxydicarbonate and mixtures and combinations thereof.

23. The composition of claim 18, wherein the viscosity of the composition is less than about 1000 centipoise at 25°C.

24. The composition of claim 18, wherein said composition contains at least about 95% non-volatile materials.

## Patentansprüche

1. Eine Beschichtungszusammensetzung, enthaltend:
(a) wenigstens eine radikalisch härtbare polymerisierbare Verbindung, wobei die polymerisierbare Verbindung wenigstens eine erste acrylatfunktionelle Verbindung und eine zweite acrylatfunktionelle Verbindung und wenigstens einen Polyester enthält, und
(b) einen Initiator, wobei der Initiator eine Halbwertszeit von etwa 10 Stunden bei weniger als etwa 50°C besitzt, und
wobei die Zusammensetzung 50% - 95%, bezogen auf das Gesamtgewicht der Zusammensetzung, polymerisierbare Verbindung und etwa 0,1 % - 4%, bezogen auf das Gesamtgewicht der Zusammensetzung, Initiator enthält, und wobei die Viskosität der Zusammensetzung niedriger als etwa 3500 Centipoise bei 25°C ist.

2. Die Zusammensetzung nach Anspruch 1, wobei der Initiator eine Halbwertszeit von etwa 10 Stunden bei etwa 35 - 45°C besitzt.

3. Die Zusammensetzung nach Anspruch 1, wobei die Zusammensetzung im Wesentlichen frei von einem Photoinitiator ist.

4. Die Zusammensetzung nach Anspruch 1, die ferner ein leitendes Pigment enthält, wobei das Pigment in einer Menge zwischen etwa 0,5 Gew.-% bis etwa 10 Gew.-%, bezogen auf das Gesamtgewicht der Zusammensetzung, vorliegt.

5. Die Zusammensetzung nach Anspruch 1, wobei die erste acrylatfunktionelle Verbindung monofunktionell ist und die zweite acrylatfunktionelle Verbindung polyfunktionell ist.

6. Die Zusammensetzung nach Anspruch 1, wobei die ersten und zweiten acrylatfunktionellen Verbindungen ausgewählt sind aus der Gruppe, bestehend aus: Monoacrylaten, Diacrylaten, Triacrylaten, Polyacrylaten, aliphatischen und aromatischen urethanmodifizierten Acrylaten, Urethanacrylaten, polyestermodifizierten Acrylaten, Polyesteracrylaten, Vinylacrylaten, Epoxidacrylaten, epoxidmodifizierten Acrylaten, Polyetheracrylaten, aminmodifizierten Acrylaten, acrylpolymermodifizierten Acrylaten, säurefunktionellen Acrylaten, säuremodifizierten Acrylaten, Siliconacrylaten, siliconmodifizierten Acrylaten, acrylatfunktionellen cycloaliphatischen Harzen, acrylatfunktionellen kationischen Harzen, Hybridacrylaten, ethoxylierten Bisphenol-A-Acrylaten, propoxylierten Acrylaten, ethoxylierten Acrylaten, trifunktionellen Acrylsäureestern, ungesättigten cyclischen Dionen, Polyesteracrylaten, Silicaacrylaten, Acrylacrylaten und Mischungen davon

7. Die Zusammensetzung nach Anspruch 1, wobei der Initiator ein Radikalinitiator ist, ausgewählt aus der Gruppe, bestehend aus: Diacylperoxiden, Dialkylperoxiden, Hydroperoxiden, Ketonperoxiden, Monoperoxycarbonaten, Peroxydicarbonaten, Peroxyestern und Peroxyketalen, einschließlich tert.-Butylperbenzoat, tert.-Butylperoctoat in Diallylphthalat, Diacetylperoxid in Dimethylphthalat, Dibenzoylperoxid, Di(p-chlorbenzoyl)peroxid in Dibutylphthalat, Di(2,4-dichlorbenzoyl)-peroxid mit Dibutylphthalat, Dilauroylperoxid, Methylethylketonperoxid, Cyclohexanonperoxid in Dibutylphthalat, 3,5-Dihydroxy-3,4-dimethyl-1,2-dioxacyclopentan, t-Butylperoxy(2-ethylhexanoat), Caprylylperoxid, 2,5-Dimethyl-2,5-di(benzoylperoxy)hexan, 1-Hydroxycyclohexylhydroperoxid-1, t-Butylperoxy(2-ethylbutyrat), 2,5-Dimethyl-2,5-bis(t-butylperoxy)hexan, Cumolhydroperoxid, Diacetylperoxid, t-Butylhydroperoxid, Ditertiärbutylperoxid, 3,5-Dihydroxy-3,5-dimethyl-1,2-oxacyclopentan und 1,1-Bis(t-butylperoxy)-3,3,5-trimethylcyclohexan und Di-(4-t-butylcyclohexyl)peroxydicarbonat und Mischungen und Kombinationen davon.

8. Die Zusammensetzung nach Anspruch 1, wobei der Initiator Di-(4-t-butylcyclohexyl)peroxydicarbonat enthält.

9. Die Zusammensetzung nach Anspruch 4, wobei das leitende Pigment Ruß-Pigment enthält.

10. Die Zusammensetzung nach Anspruch 9, wobei das leitende Pigment ferner ein nichtleitendes Pigment enthält.

11. Die Zusammensetzung nach Anspruch 1, wobei die Viskosität der Zusammensetzung weniger als etwa 1000 Centipoise bei 25°C beträgt.

12. Die Zusammensetzung nach Anspruch 1, wobei die Zusammensetzung zu wenigstens etwa 95% aus nichtflüchtigen Materialien besteht.

13. Ein Verfahren zur Grundierung und Versiegelung eines nichtleitenden Kunststoffsubstrats, umfassend das Aufsprühen einer Zusammensetzung, die enthält:
(a) eine radikalisch härtbare polymerisierbare Verbindung, enthaltend wenigstens zwei acrylatfunktionelle Verbindungen und wenigstens einen Polyester, und
(b) einen Initiator, wobei der Initiator eine Halbwertszeit von etwa 10 Stunden bei weniger als etwa 50°C besitzt,
auf das Substrat.

14. Das Verfahren nach Anspruch 13, wobei das Substrat SMC ist.

15. Das Verfahren nach Anspruch 14, wobei das SMC-Substrat eine Kraftfahrzeug-Karosserieplatte ist.

16. Das Verfahren nach Anspruch 13, wobei der Initiator ein Radikalinitiator ist, ausgewählt aus der Gruppe, bestehend aus: Diacylperoxiden, Dialkylperoxiden, Hydroperoxiden, Ketonperoxiden, Monoperoxycarbonaten, Peroxydicarbonaten, Peroxyestern und Peroxyketalen, einschließlich tert.-Butylperbenzoat, tert.-Butylperoctoat in Diallylphthalat, Diacetylperoxid in Dimethylphthalat, Dibenzoylperoxid, Di(p-chlorbenzoyl)peroxid in Dibutylphthalat, Di(2,4-dichlorbenzoyl)-peroxid mit Dibutylphthalat, Dilauroylperoxid, Methylethylketonperoxid, Cyclohexanonperoxid in Dibutylphthalat, 3,5-Dihydroxy-3,4-dimethyl-1,2-dioxacyclopentan, t-Butylperoxy(2-ethylhexanoat), Caprylylperoxid, 2,5-Dimethyl-2,5-di(benzoylperoxy)hexan, 1-Hydroxycyclohexylhydroperoxid-1, t-Butylperoxy(2-ethylbutyrat), 2,5-Dimethyl-2,5-bis(t-butylperoxy)hexan, Cumolhydroperoxid, Diacetylperoxid, t-Butylhydroperoxid, Ditertiärbutylperoxid, 3,5-Dihydroxy-3,5-dimethyl-1,2-oxacyclopentan und 1,1-Bis(t-butylperoxy)-3,3,5-trimethylcyclohexan und Di-(4-t-butylcyclohexyl)peroxydicarbonat und Mischungen und Kombinationen davon.

17. Das Verfahren nach Anspruch 13, wobei die Viskosität der Zusammensetzung weniger als etwa 3500 Centipoise bei 25°C beträgt.

18. Eine elektrisch leitende Versiegelung/Primer-Zusammensetzung, enthaltend:
(a) wenigstens eine radikalisch härtbare polymerisierbare Verbindung, wobei die polymerisierbare Verbindung wenigstens ein Polyacrylat, wenigstens ein Monoacrylat und wenigstens einen Polyester enthält,
(b) einen Thermoinitiator, wobei der Initiator eine Halbwertszeit von etwa 10 Stunden bei weniger als etwa 50°C besitzt, und
(c) ein leitendes Pigment,
wobei die Zusammensetzung 50% - 95%, bezogen auf das Gesamtgewicht der Zusammensetzung, polymerisierbare Verbindung und etwa 0,1% - 4%, bezogen auf das Gesamtgewicht der Zusammensetzung, Initiator enthält, wobei die Zusammensetzung im Wesentlichen frei von einem Photoinitiator ist, und wobei die Viskosität der Zusammensetzung niedriger als etwa 3500 Centipoise bei 25°C ist.

19. Die Zusammensetzung nach Anspruch 18, wobei der Initiator eine Halbwertszeit von etwa 10 Stunden bei etwa 35 - 45°C besitzt.

20. Die Zusammensetzung nach Anspruch 18, wobei das Pigment in einer Menge zwischen etwa 0,5 Gew.-% bis etwa 10 Gew.-%, bezogen auf das Gesamtgewicht der Zusammensetzung, vorliegt.

21. Die Zusammensetzung nach Anspruch 18, wobei das Pigment Ruß enthält.

22. Die Zusammensetzung nach Anspruch 18, wobei der Initiator ein Thermoinitiator ist, ausgewählt aus der Gruppe, bestehend aus: Diacylperoxiden, Dialkylperoxiden, Hydroperoxiden, Ketonperoxiden, Monoperoxycarbonaten, Peroxydicarbonaten, Peroxyestern und Peroxyketalen, einschließlich tert.-Butylperbenzoat, tert.-Butylperoctoat in Diallylphthalat, Diacetylperoxid in Dimethylphthalat, Dibenzoylperoxid, Di(p-chlorbenzoyl)peroxid in Dibutylphthalat, Di(2,4-dichlorbenzoyl)peroxid mit Dibutylphthalat, Dilauroylperoxid, Methylethylketonperoxid, Cyclohexanonperoxid in Dibutylphthalat, 3,5-Dihydroxy-3,4-dimethyl-1,2-dioxacyclopentan, t-Butylperoxy(2-ethylhexanoat), Caprylylperoxid, 2,5-Dimethyl-2,5-di(benzoylperoxy)hexan, 1-Hydroxycyclohexylhydroperoxid-1, t-Butylperoxy(2-ethylbutyrat), 2,5-Dimethyl-2,5-bis(t-butylperoxy)hexan, Cumolhydroperoxid, Diacetylperoxid, t-Butylhydroperoxid, Ditertiärbutylperoxid, 3,5-Dihydroxy-3,5-dimethyl-1,2-oxacyclopentan und 1,1-Bis(t-butylperoxy)-3,3,5-trimethylcyclohexan und Di-(4-t-butylcyclohexyl)peroxydicarbonat und Mischungen und Kombinationen davon.

23. Die Zusammensetzung nach Anspruch 18, wobei die Viskosität der Zusammensetzung weniger als etwa 1000 Centipoise bei 25°C beträgt.

24. Die Zusammensetzung nach Anspruch 18, wobei die Zusammensetzung wenigsten etwa 95% nichtflüchtige Materialien enthält.

## Revendications

1. Composition de revêtement, comprenant :
(a) au moins un composé polymérisable et durcissable par les radicaux libres, ledit composé polymérisable comprenant au moins un premier composé fonctionnel acrylate et un second composé fonctionnel acrylate et au moins un polyester ; et
(b) un initiateur, l'initiateur ayant une demi-vie d'environ 10 heures à moins d'environ 50°C ; et
ladite composition comprenant de 50 % à 95 %, par rapport au poids total de la composition, du composé polymérisable et d'environ 0,1 % à 4 %, par rapport au poids total de la composition, de l'initiateur ; et la viscosité de la composition étant inférieure à environ 3 500 centipoises à 25°C.

2. Composition selon la revendication 1, dans laquelle ledit initiateur a une demi-vie d'environ 10 heures à environ 35 à 45°C.

3. Composition selon la revendication 1, dans laquelle ladite composition est sensiblement dépourvue de photoinitiateur.

4. Composition selon la revendication 1, comprenant en outre un pigment conducteur, ledit pigment étant présent en une quantité comprise entre environ 0,5 % et environ 10 % en poids, par rapport au poids total de la composition.

5. Composition selon la revendication 1, dans laquelle le premier composé fonctionnel acrylate est monofonctionnel et le second composé fonctionnel acrylate est polyfonctionnel.

6. Composition selon la revendication 1, dans laquelle les premier et second composés fonctionnels acrylates sont choisis dans le groupe constitué par : les monoacrylates, les diacrylates, les triacrylates, les polyacrylates, les acrylates aliphatiques et aromatiques modifiés par un uréthane, les uréthane acrylates, les acrylates modifiés par un polyester, les polyester acrylates, les acrylates de vinyle, les époxy acrylates, les acrylates modifiés par un époxy, les polyéther acrylates, les acrylates modifiés par une amine, les acrylates modifiés par un polymère acrylique, les acrylates à fonctionnalité acide, les acrylates modifiés par un acide, les silicone acrylates, les acrylates modifiés par une silicone, les résines cycloaliphatiques à fonctionnalité acrylate, les résines cationiques à fonctionnalité acrylate, les acrylates hybrides de ceux-ci, les acrylates de bisphénol A éthoxylés, les acrylates propoxylés, les acrylates éthoxylés, les esters acryliques trifonctionnels, les diones cycliques insaturées, les polyester acrylates, les acrylates de silice, les acrylates acryliques, et les mélanges de ceux-ci.

7. Composition selon la revendication 1, dans laquelle l'initiateur est un initiateur de radicaux libres choisi dans le groupe constitué par : les peroxydes de diacyle, les peroxydes de dialkyle, les hydroperoxydes, les peroxydes de cétone, les monoperoxycarbonates, les peroxydicarbonates, les peroxyesters, et les peroxycétals, y compris le perbenzoate de butyle tertiaire, le peroctoate de butyle tertiaire dans du phtalate de diallyle, le peroxyde de diacétyle dans du phtalate de diméthyle, le peroxyde de dibenzoyle, le peroxyde de di(p-chlorobenzoyle) dans du phtalate de dibutyle, le peroxyde de di(2,4-dichlorobenzoyle) avec du phtalate de dibutyle, le peroxyde de dilauroyle, le peroxyde de méthyl éthyl cétone, le peroxyde de cyclohexanone dans du phtalate de dibutyle, le 3,5-dihydroxy-3,4-diméthyl-1,2-dioxacyclopentane, le t-butylperoxy(2-éthyl hexanoate), le peroxyde de caprylyle, le 2,5-diméthyl-2,5-di-(benzoyl peroxy)hexane, le 1-hydroxy cyclohexyl hydroperoxyde-1, le t-butyl peroxy (2-éthyl butyrate), le 2,5-diméthyl-2,5-bis (t-butyl peroxy) hexane, l'hydroperoxyde de cumyle, le peroxyde de diacétyle, l'hydroperoxyde de t-butyle, le peroxyde de butyle ditertiaire, le 3,5-dihydroxy-3,5-diméthyl-1,2-oxacyclopentane, et le 1,1-bis(t-butyl peroxy)-3,3,5-triméthyl cyclohexane et le di-(4-t-butyl cyclohexyl) peroxydicarbonate et les mélanges et combinaisons de ceux-ci.

8. Composition selon la revendication 1, dans laquelle ledit initiateur comprend le di-(4-t-butyl cyclohexyl) peroxydicarbonate.

9. Composition selon la revendication 4, dans laquelle le pigment conducteur comprend un pigment de noir de carbone.

10. Composition selon la revendication 9, dans laquelle le pigment conducteur comprend en outre un pigment non conducteur.

11. Composition selon la revendication 1, dans laquelle la viscosité de la composition est inférieure à environ 1 000 centipoises à 25°C.

12. Composition selon la revendication 1, dans laquelle la composition comprend au moins environ 95 % de matériaux non volatils.

13. Méthode d'apprêtage et d'étanchéisation d'un substrat en plastique non conducteur, comprenant la pulvérisation sur le substrat d'une composition comprenant :
(a) un composé polymérisable et durcissable par les radicaux libres comprenant au moins deux composés fonctionnels acrylates et au moins un polyester ; et
(b) un initiateur, l'initiateur ayant une demi-vie d'environ 10 heures à moins d'environ 50°C.

14. Méthode selon la revendication 13, dans laquelle le substrat est un composite SMC.

15. Méthode selon la revendication 14, dans laquelle le substrat de composite SMC est une tôle de carrosserie automobile.

16. Méthode selon la revendication 13, dans laquelle ledit initiateur est un initiateur de radicaux libres choisi dans le groupe constitué par : les peroxydes de diacyle, les peroxydes de dialkyle, les hydroperoxydes, les peroxydes de cétone, les monoperoxycarbonates, les peroxydicarbonates, les peroxyesters, et les peroxycétals, y compris le perbenzoate de butyle tertiaire, le peroctoate de butyle tertiaire dans du phtalate de diallyle, le peroxyde de diacétyle dans du phtalate de diméthyle, le peroxyde de dibenzoyle, le peroxyde de di(p-chlorobenzoyle) dans du phtalate de dibutyle, le peroxyde de di(2,4-dichlorobenzoyle) avec du phtalate de dibutyle, le peroxyde de dilauroyle, le peroxyde de méthyl éthyl cétone, le peroxyde de cyclohexanone dans du phtalate de dibutyle, le 3,5-dihydroxy-3,4-diméthyl-1,2-dioxacyclopentane, le t-butylperoxy(2-éthyl hexanoate), le peroxyde de caprylyle, le 2,5-diméthyl-2,5-di-(benzoyl peroxy)hexane, le 1-hydroxy cyclohexyl hydroperoxyde-1, le t-butyl peroxy (2-éthyl butyrate), le 2,5-diméthyl-2,5-bis(t-butyl peroxy) hexane, l'hydroperoxyde de cumyle, le peroxyde de diacétyle, l'hydroperoxyde de t-butyle, le peroxyde de butyle ditertiaire, le 3,5-dihydroxy-3,5-diméthyl-1,2-oxacyclopentane, et le 1,1-bis(t-butyl peroxy)-3,3,5-triméthyl cyclohexane et le di-(4-t-butyl cyclohexyl) peroxydicarbonate et les mélanges et combinaisons de ceux-ci.

17. Méthode selon la revendication 13, dans laquelle la viscosité de la composition est inférieure à environ 3 500 centipoises à 25°C.

18. Composition d'agent d'étanchéité/d'apprêt électroconductrice, comprenant :
(a) au moins un composé polymérisable et durcissable par radiation, ledit composé polymérisable comprenant au moins un polyacrylate, au moins un monoacrylate, et au moins un polyester ;
(b) un initiateur thermique, l'initiateur ayant une demi-vie d'environ 10 heures à moins d'environ 50°C ; et
(c) un pigment conducteur ;
ladite composition comprenant de 50 % à 95 %, par rapport au poids total de la composition, du composé polymérisable et d'environ 0,1 % à 4 %, par rapport au poids total de la composition, de l'initiateur ; ladite composition étant sensiblement dépourvue d'un photoinitiateur ; et la viscosité de la composition étant inférieure à environ 3 500 centipoises à 25°C.

19. Composition selon la revendication 18, dans laquelle ledit initiateur a une demi-vie d'environ 10 heures à environ 35 à 45°C.

20. Composition selon la revendication 18, dans laquelle ledit pigment est présent en une quantité comprise entre environ 0,5 % et environ 10 % en poids, par rapport au poids total de la composition.

21. Composition selon la revendication 18, dans laquelle ledit pigment comprend du noir de carbone.

22. Composition selon la revendication 18, dans laquelle l'initiateur est un initiateur thermique choisi dans le groupe constitué par : les peroxydes de diacyle, les peroxydes de dialkyle, les hydroperoxydes, les peroxydes de cétone, les monoperoxycarbonates, les peroxydicarbonates, les peroxyesters, et les peroxycétals, y compris le perbenzoate de butyle tertiaire, le peroctoate de butyle tertiaire dans du phtalate de diallyle, le peroxyde de diacétyle dans du phtalate de diméthyle, le peroxyde de dibenzoyle, le peroxyde de di(p-chlorobenzoyle) dans du phtalate de dibutyle, le peroxyde de di(2,4-dichlorobenzoyle) avec du phtalate de dibutyle, le peroxyde de dilauroyle, le peroxyde de méthyl éthyl cétone, le peroxyde de cyclohexanone dans du phtalate de dibutyle, le 3,5-dihydroxy-3,4-diméthyl-1,2-dioxacyclopentane, le t-butylperoxy(2-éthyl hexanoate), le peroxyde de caprylyle, le 2,5-diméthyl-2,5-di(benzoyl peroxy)hexane, le 1-hydroxy cyclohexyl hydroperoxyde-1, le t-butyl peroxy (2-éthyl butyrate), le 2,5-diméthyl-2,5-bis(t-butyl peroxy) hexane, l'hydroperoxyde de cumyle, le peroxyde de diacétyle, l'hydroperoxyde de t-butyle, le peroxyde de butyle ditertiaire, le 3,5-dihydroxy-3,5-diméthyl-1,2-oxacyclopentane, et le 1,1-bis(t-butyl peroxy)-3,3,5-triméthyl cyclohexane et le di-(4-t-butyl cyclohexyl) peroxydicarbonate et les mélanges et combinaisons de ceux-ci.

23. Composition selon la revendication 18, dans laquelle la viscosité de la composition est inférieure à environ 1 000 centipoises à 25°C.

24. Composition selon la revendication 18, dans laquelle ladite composition contient au moins environ 95 % de matériaux non volatils.
